# EUROPEAN PATENT APPLICATION

(11) **EP 1 162 203 A1**
(43) Date of publication of application: **12.12.2001**
(21) Application number: 01304970.5
(22) Date of filing: 07.06.2001
(51) Int. Cl.: C07F 7/08, C07F 7/18, C08G 77/04, C09C 3/12

(54) **Silalkylene oligosiloxane surface treating agents and process for their preparation**

(30) Priority: 08.06.2000 JP 2000171476
(71) Applicant: Dow Corning Toray Silicone Co., Ltd., Tokyo (JP)
(72) Inventor: Enami, Hiroji, Dow Corning Toray Silicone Co. Ltd., Ichihara-shi, Chiba Prefecture (JP); Onishi, Masayuki, Dow Corning Toray Silic. Co.Ltd., Ichihara-shi, Chiba Prefecture (JP); Okawa, Tadashi, Dow Corning Toray Silicone Co. Ltd, Ichihara-shi, Chiba Prefecture (JP); Amako, Masaaki, Dow Corning Toray Silicone Co. Ltd, Ichihara-shi, Chiba Prefecture (JP)
(74) Representative: Kyle, Diana

(57) **Abstract**

A silalkylene oligosiloxane described by general formula 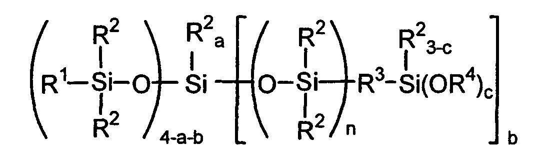 where R¹ is a monovalent hydrocarbon group having at least 2 carbon atoms that does not have aliphatic unsaturated bonds, each R² is an independently selected monovalent hydrocarbon group having 1 to 10 carbon atoms that does not have aliphatic unsaturated bonds, R³ is an alkylene group having at least 2 carbon atoms, R⁴ is an alkyl group, *a* is an integer of 0 to 2 and *b* is an integer of 1 to 3, with the proviso that *a*+*b* is an integer of 1 to 3, *c* is an integer of 1 to 3, and *n* is an integer of 0 or 1; a process for making the silalkylene oligosiloxane and the use thereof as a surface treatment agent.

## Description

The present invention relates to a silalkylene oligosiloxane surface treating agent and to a process for preparation of the same. More specifically the present invention relates to a novel silalkylene oligosiloxane having silicon-bonded alkoxy groups and a monovalent hydrocarbon having at least 2 carbon atoms that does not have aliphatic unsaturated bonds, a process for efficiently preparing the siloxane, and to a surface treating agent consisting of the siloxane.

As described in Japanese Laid-Open Patent Application Publication No. Hei 03(1992)-197486, Japanese Laid-Open Patent Application Publication No. Hei 04(1993)-007305, and Japanese Laid-Open Patent Application Publication No. 05(1994)-070514, there are known oligosiloxanes having silicon-bonded alkoxy groups. However, a silalkylene oligosiloxane having silicon-bonded alkoxy groups and a monovalent hydrocarbon group having at least 2 carbon atoms that does not have aliphatic unsaturated bonds has heretofore been unknown. In addition, this type of silalkylene oligosiloxane having silicon-bonded alkoxy groups is expected to find use as a surface treating agent for inorganic powders.

It is an object of the present invention to provide a novel silalkylene oligosiloxane having silicon-bonded alkoxy groups and a monovalent hydrocarbon group having at least 2 carbon atoms that does not have aliphatic unsaturated bonds, a process for efficiently preparing the siloxane, and a surface treating agent consisting of the siloxane.

The present invention is a silalkylene oligosiloxane described by general formula (I) 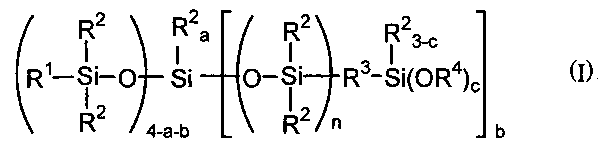 where R¹ is a monovalent hydrocarbon group having at least two carbon atoms that does not have aliphatic unsaturated bonds, each R² is an independently selected monovalent hydrocarbon group having 1 to 10 carbon atoms that do not have aliphatic unsaturated bonds, R³ is an alkylene group having at least two carbon atoms, R⁴ is an alkyl group, *a* is an integer of 0 to 2 and *b* is an integer of 1 to 3, with the proviso that *a+b* is an integer of 1 to 3, c is an integer of 1 to 3, and *n* is an integer of 0 or 1. The present invention also relates to a process for making the above described silalkylene oligosiloxane and to its use as a surface treatment agent.

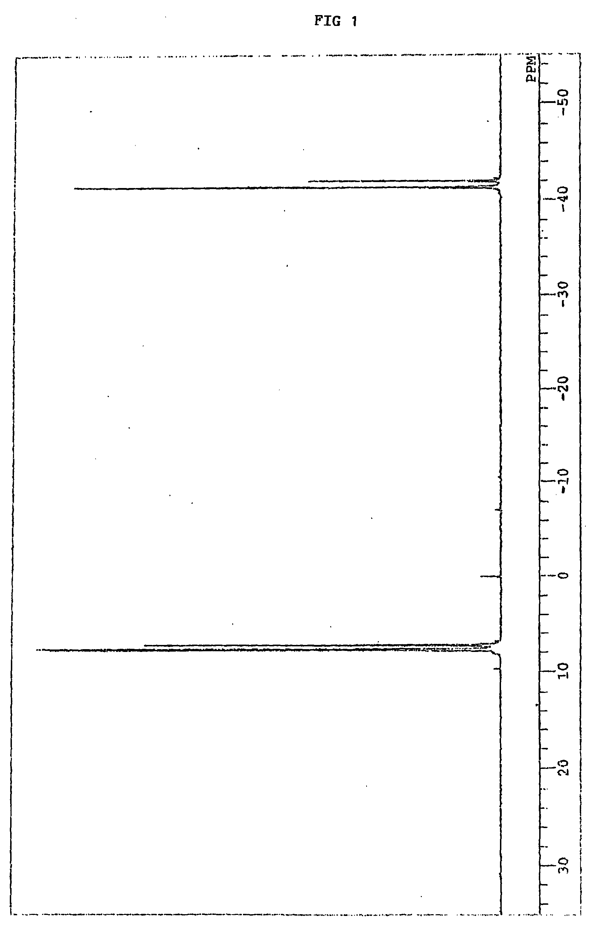

FIG. 1 - A ²⁹Si nuclear magnetic resonance spectrum chart of the silalkylene oligosiloxane prepared in Application Example 1.

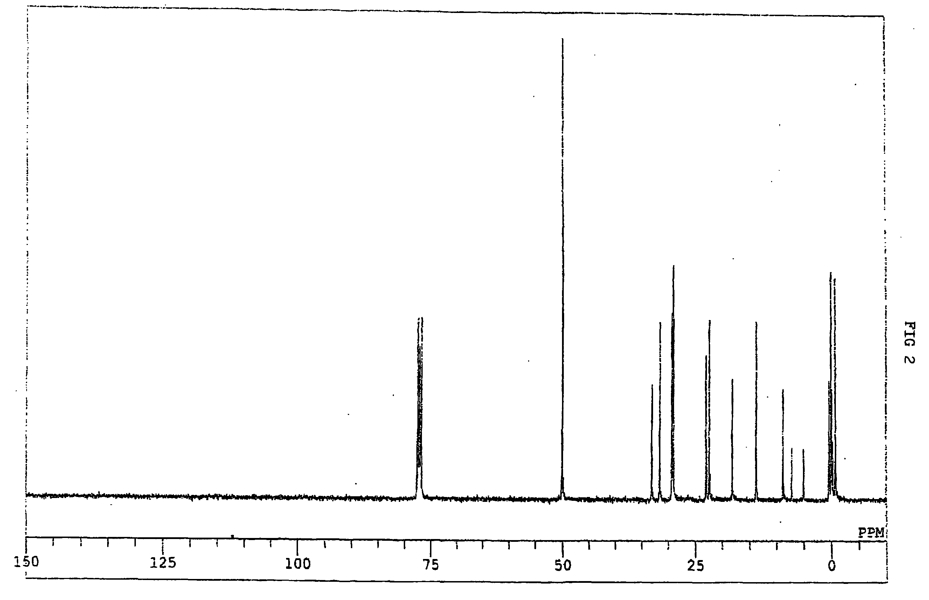

FIG. 2 - A ¹³C nuclear magnetic resonance spectrum chart of the silalkylene oligosiloxane prepared in Application Example 1.

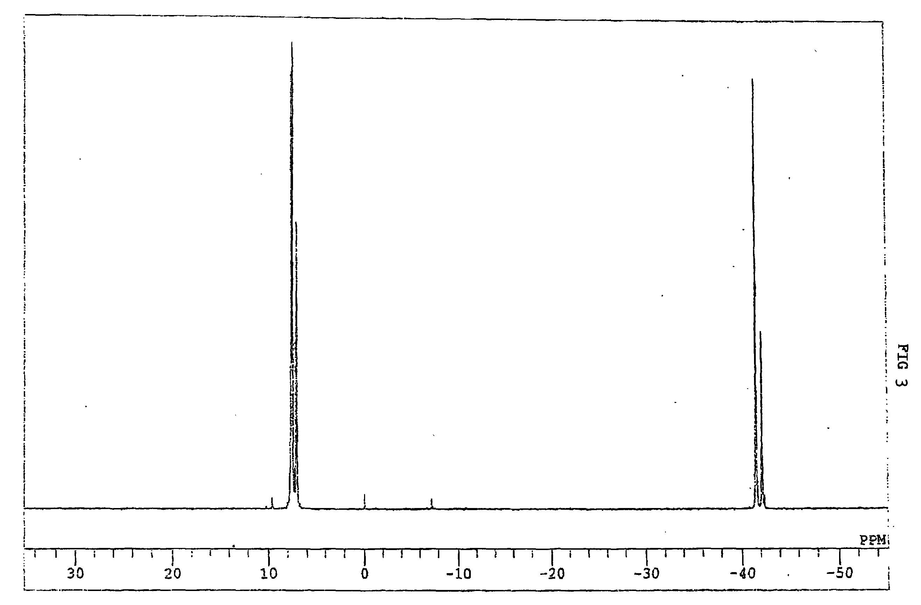

FIG. 3 - A ²⁹Si nuclear magnetic resonance spectrum chart of the silalkylene oligosiloxane prepared in Application Example 2.

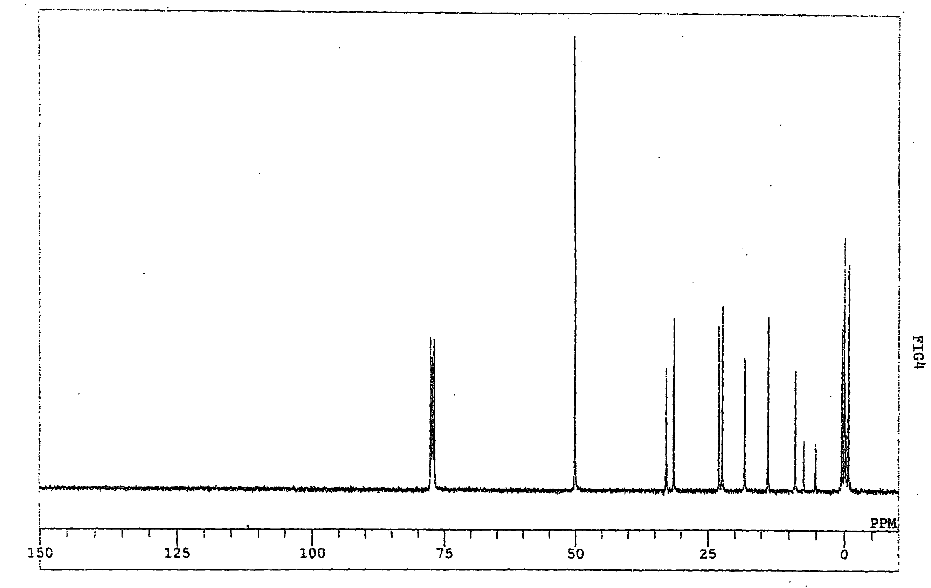

FIG. 4 - A ¹³C nuclear magnetic resonance spectrum chart of the silalkylene oligosiloxane prepared in Application Example 2.

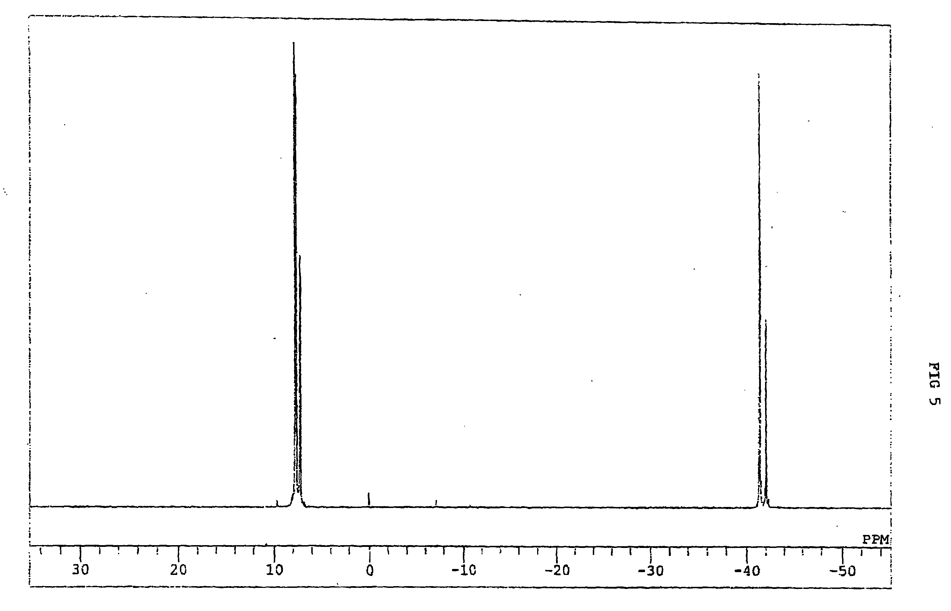

FIG. 5 - A ²⁹Si nuclear magnetic resonance spectrum chart of the silalkylene oligosiloxane prepared in Application Example 3.

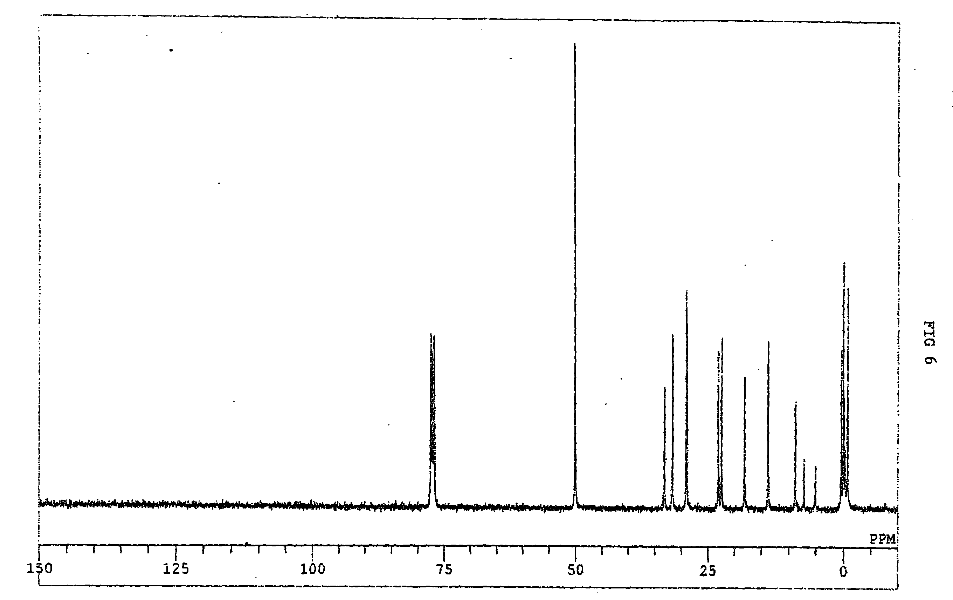

FIG. 6 - A ¹³C nuclear magnetic resonance spectrum chart of the silalkylene oligosiloxane prepared in Application Example 3.

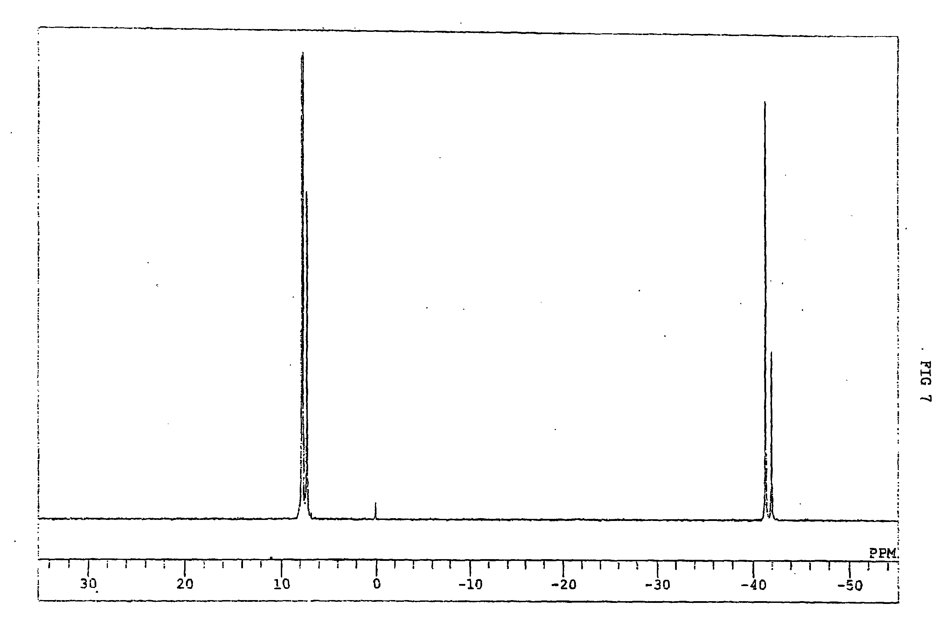

FIG. 7 - A ²⁹Si nuclear magnetic resonance spectrum chart of the silalkylene oligosiloxane prepared in Application Example 4.

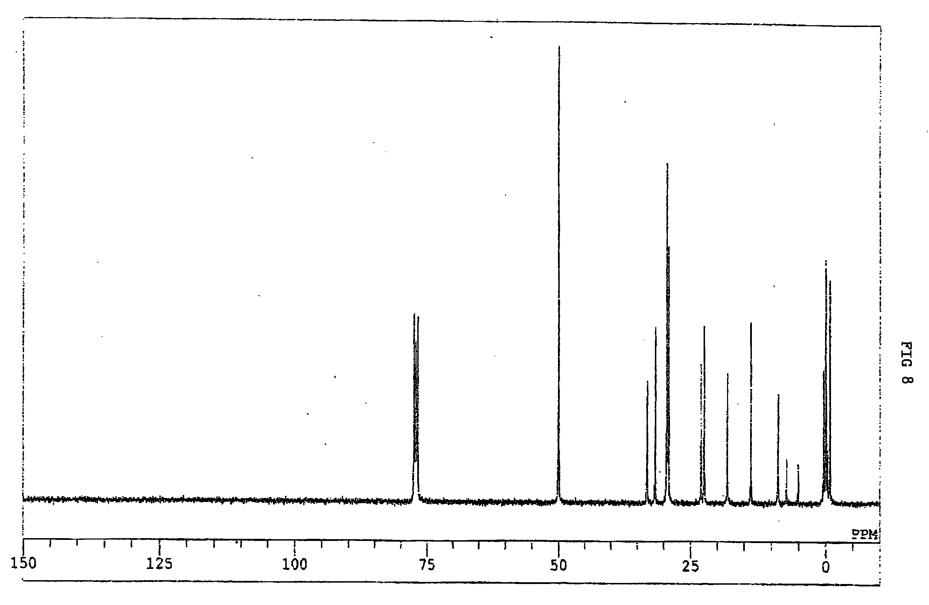

FIG. 8 - A ¹³C nuclear magnetic resonance spectrum chart of the silalkylene oligosiloxane prepared in Application Example 4.

The present invention is a silalkylene oligosiloxane described by general formula (I) 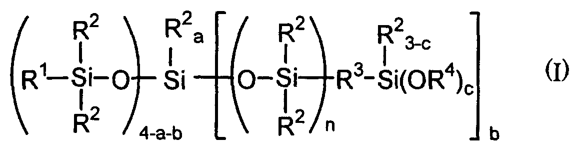 where R¹ is a monovalent hydrocarbon group having at least two carbon atoms that does not have aliphatic unsaturated bonds, each R² is an independently selected monovalent hydrocarbon group having 1 to 10 carbon atoms that do not have aliphatic unsaturated bonds, R³ is an alkylene group having at least two carbon atoms, R⁴ is an alkyl group, *a* is an integer of 0 to 2 and *b* is an integer of 1 to 3, with the proviso that *a+b* is an integer of 1 to 3, *c* is an integer of 1 to 3, and *n* is an integer of 0 or 1.

In addition, the process for the preparation of the present silalkylene oligosiloxane comprises reacting a mixture comprising (A) a silalkylene oligosiloxane containing silicon-bonded hydrogen atoms described by general formula 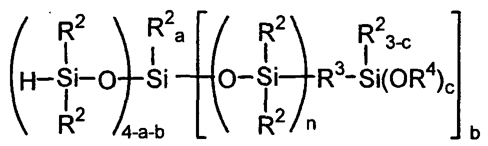 where each R² is an independently selected monovalent hydrocarbon groups having 1 to 10 carbon atoms that do not have aliphatic unsaturated bonds, R³ is an alkylene group having at least 2 carbon atoms, R⁴ is an alkyl group, *a* is an integer of 0 to 2 and b is an integer of 1 to 3, with the proviso that *a+b* is an integer of 1 to 3, c is an integer of 1 to 3, and the subscript *n* is an integer of 0 or 1; (B) a hydrocarbon compound having one aliphatic double bond per molecule; and (C) a hydrosilation reaction catalyst.

First of all, detailed explanations are provided regarding the silalkylene oligosiloxane of the present invention. The silalkylene oligosiloxane of the present invention is described by the general formula (I) 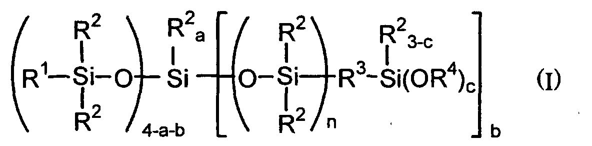 R¹ in the formula above is a monovalent hydrocarbon having at least two carbon atoms that does not have aliphatic unsaturated bonds, preferably a monovalent hydrocarbon group having 6 to 20 carbon atoms that does not have aliphatic unsaturated bonds. For example, R¹ can be ethyl, propyl, butyl, pentyl, hexyl, heptyl, octyl, nonyl, decyl, undecyl, dodecyl, tridecyl, tetradecyl, pentadecyl, hexadecyl, heptadecyl, octadecyl, nonadecyl, eicosyl, and other linear alkyl groups; 2-methylundecyl, 1-hexylheptyl, and other branched alkyl groups; cyclododecyl, and other cyclic alkyl groups; and 2-(2,4,6-trimethylphenyl)propyl and other aralkyl groups. Preferably R¹ is linear alkyl groups having 2 to 20 carbon atoms, and especially preferably linear alkyl groups having 6 to 20 carbon atoms.

Each R² in the above formula is an independently selected monovalent hydrocarbon groups having 1 to 10 carbon atoms that do not have aliphatic unsaturated bonds. R² can be, for example, methyl, ethyl, propyl, butyl, hexyl, decyl, and other linear alkyl groups; isopropyl, *tert*-butyl, isobutyl, and other branched alkyl groups; cyclohexyl and other cyclic alkyl groups; phenyl, tolyl, xylyl, and other aryl groups; and benzyl, phenethyl, and other aralkyl groups. Preferably R² is an alkyl group having 1 to 4 carbon atoms, and especially preferably methyl and ethyl.

R³ in the formula above is an alkylene group having at least 2 carbon atoms exemplified by methylmethylene, ethylene, butylene, and hexylene. R³ is preferably ethylene, methylmethylene, and hexylene, and especially preferably, ethylene and methylmethylene.

R⁴ in the formula above is an alkyl group, for example, methyl, ethyl, propyl, butyl, hexyl, decyl, and other linear alkyl group; isopropyl, *tert*-butyl, isobutyl, and other branched alkyl groups; and cyclohexyl, and other cyclic alkyl groups. Preferably R⁴ is an alkyl group having 1 to 4 carbon atoms, and especially preferably methyl and ethyl.

In the above formula subscript *a* is an integer of 0 to 2, subscript *b* is an integer of 1 to 3, and *a+b* is an integer of 1 to 3. Especially preferred is when subscript *a* is 2 and subscript *b* is 1. Subscript c in the formula above is 1 to 3. Subscript *n* in the formula above is 0 or 1.

Because the present silalkylene oligosiloxane has silicon-bonded alkoxy groups, it is useful as a reactive silalkylene oligosiloxane and particularly useful as a surface treating agent for inorganic powders. This type of silalkylene oligosiloxane is exemplified by the following compounds.

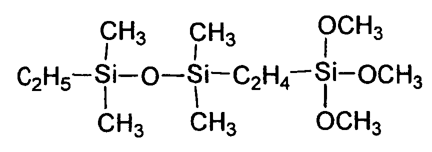

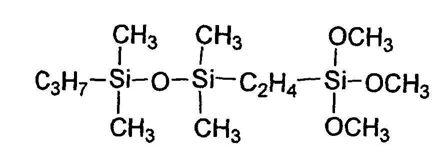

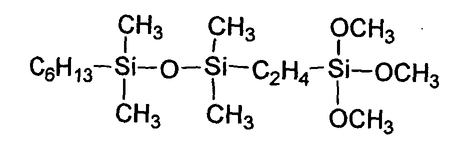

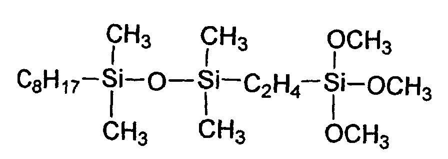

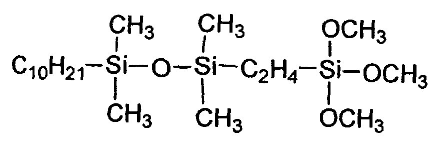

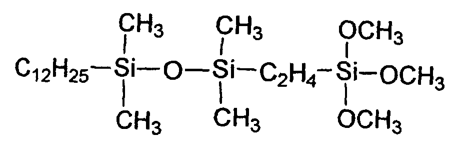

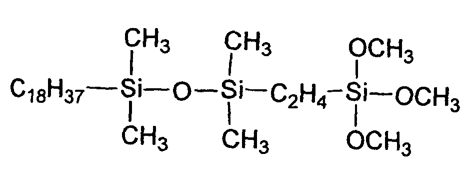

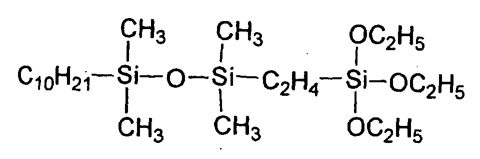

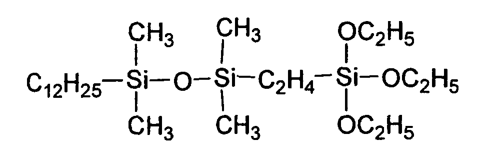

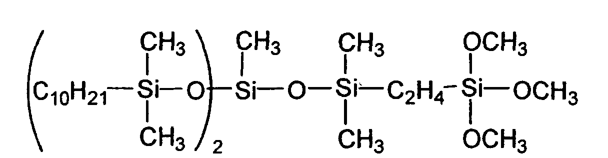

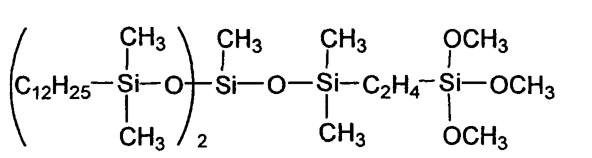

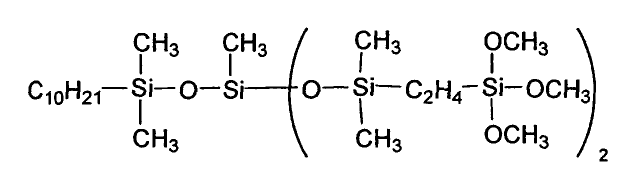

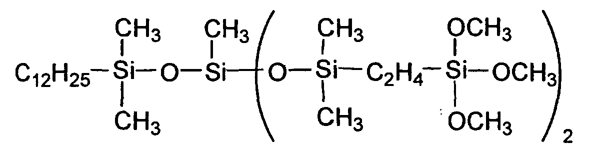

Next, the process for the preparation of the silalkylene oligosiloxane of the present invention is explained in detail. The process comprises reacting a mixture comprising (A) a silalkylene oligosiloxane containing silicon-bonded hydrogen atoms and (B) a hydrocarbon compound having one aliphatic double bond, and (C) a hydrosilation reaction catalyst. The silalkylene oligosiloxane of component (A) is described by general formula

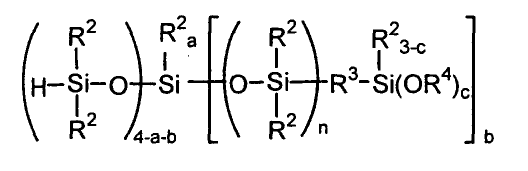

Each R² in the formula is an independently selected monovalent hydrocarbon group comprising 1 to 10 carbon atoms that does not have aliphatic unsaturated bonds and is exemplified by the same groups as those mentioned above. Here R² is preferably alkyl groups having 1 to 4 carbon atoms, and especially preferably methyl and ethyl. In addition, R³ in the formula above is an alkylene group and is exemplified by the same groups as those mentioned above. Here, from the standpoint of the ease of procuring the raw materials, R³ is preferably ethylene, methylmethylene, and hexylene; and especially preferably ethylene and methylmethylene. R⁴ in the formula above is an alkyl group exemplified by the same groups as those mentioned above, preferably alkyl groups having 1 to 4 carbon atoms, and especially preferably methyl and ethyl. In addition, the subscript *a* in the formula above is an integer of 0 to 2, the subscript *b* is an integer of 1 to 3, and *a+b* is an integer of 1 to 3. From the standpoint of the ease of raw material procurement, as well as how easy it is to synthesize, it is particularly preferable that subscript *a* should be 2 and subscript *b* should be 1. In addition, subscript c in the formula above is 1 to 3 and subscript n in the formula above is 0 or 1.

Component (A) can be for example, trimethoxysilylethyl(dimethylsiloxy)dimethylsilane, triethoxysilylethyl(dimethylsiloxy)dimethylsilane, tripropoxysilylethyl(dimethylsiloxy)dimethylsilane, and other trialkoxysilylethyl(dialkylsiloxy)dialkylsilane compounds; trimethoxysilylethyl{methylbis(dimethylsiloxy)siloxy}dimethylsilane, triethoxysilylethyl {methylbis(dimethylsiloxy)siloxy} dimethylsilane, tripropoxysilylethyl{methylbis(dimethylsiloxy)siloxy}dimethylsilane, and other trialkoxysilylethyl {alkylbis(dialkylsiloxy)siloxy} dialkylsilane compounds; trimethoxysilylethyl{tris(dimethylsiloxy)siloxy}dimethylsilane, triethoxysilylethyl{tris(dimethylsiloxy)siloxy}dimethylsilane, tripropoxysilylethyl{tris(dimethylsiloxy)siloxy}dimethylsilane, and other trialkoxysilylethyl{tris(dialkylsiloxy)siloxy}dimethylsilane compounds; bis(trimethoxysilylethyldimethylsiloxy)methyl(dimethylsiloxy)silane, bis(triethoxysilylethyldimethylsiloxy)methyl(dimethylsiloxy)silane, bis(tripropoxysilylethyldimethylsiloxy)methyl(dimethylsiloxy)silane, and other bis(trialkoxysilylethyldialkylsiloxy)alkyl(dialkylsiloxy)silane compounds.

Component (A) can be prepared by reacting a mixture comprising a silalkylene oligosiloxane containing silicon-bonded hydrogen atoms described by general formula 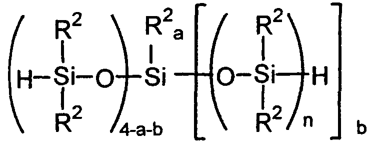 where each R² is an independently selected monovalent hydrocarbon group having 1 to 10 carbon atoms that do not have aliphatic unsaturated bonds, *a* is an integer of 0 to 2, and *b* is an integer of 1 to 3, with the proviso that *a+b* is an integer of 1 to 3, and *n* is an integer of 0 or 1; an alkoxysilane described by general formula 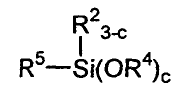 where each R² is an independently selected monovalent hydrocarbon group having 1 to 10 carbon atoms that does not have aliphatic unsaturated bonds, R⁴ is an alkyl group, R⁵ is an alkenyl group, and *c* is 1 to 3; and a hydrosilation reaction catalyst.

In the above-described oligosiloxane containing silicon-bonded hydrogen atoms, each R² is an independently selected monovalent hydrocarbon group comprising 1 to 10 carbon atoms that does not have aliphatic unsaturated bonds. R² is exemplified by the same groups as those mentioned above. Preferably R² is an alkyl group comprising 1 to 4 carbon atoms, and especially preferably methyl and ethyl. In addition, in the formula subscript *a* is an integer of 0 to 2, subscript *b* is an integer of 1 to 3, and *a+b* is an integer of 1 to 3. From the standpoint of the ease of raw material procurement, as well as how easy it is to synthesize, it is particularly preferable that subscript *a* should be 2 and subscript *b* should be 1. In addition, the subscript n in the formula above is 0 or 1.

Examples of the above-described oligosiloxanes containing silicon-bonded hydrogen atoms include bis(dimethylsiloxy)dimethylsilane, tris(dimethylsiloxy)methylsilane, tetrakis(dimethylsiloxy)dimethylsilane, bis(tetramethyldisiloxy)(dimethylsiloxy)methylsilane, and bis(tetramethyldisiloxy)bis(dimethylsiloxy)silane.

In addition, in the above-mentioned alkoxysilanes, each R² in the formula is an independently selected monovalent hydrocarbon group having 1 to 10 carbon atoms that does not have aliphatic unsaturated bonds and is exemplified by the same groups as those mentioned above. Preferably R² is an alkyl group having 1 to 4 carbon atoms, and especially preferably methyl and ethyl. Also, R⁴ in the formula above is an alkyl group exemplified by the same groups as those mentioned above. Preferably R⁴ is an alkyl group comprising 1 to 4 carbon atoms, and especially preferably methyl and ethyl. R⁵ in the above formula is an alkenyl group exemplified by vinyl, allyl, butenyl, pentenyl, and hexenyl, and preferably by vinyl, allyl, and hexenyl. In addition, subscript c in the above formula is an integer of 1 to 3. This type of alkoxysilane is exemplified by vinyltrimethoxysilane, methylvinyldimethoxysilane, allyltrimethoxysilane, allylmethyldimethoxysilane, hexenyltrimethoxysilane, and hexenylmethyldimethoxysilane.

The above-mentioned hydrosilation reaction catalyst is a catalyst that promotes the reaction of addition of the silicon-bonded hydrogen atoms of the oligosiloxane to alkenyl groups in the alkoxysilane. Examples of such catalyst include those based on the transition metals of Group VIII of the Periodic Table, preferably platinum catalysts. The platinum catalysts are exemplified by chloroplatinic acid, alcohol solutions of chloroplatinic acid, olefin complexes of platinum, alkenylsiloxane complexes of platinum, and carbonyl complexes of platinum.

Component (B) is a hydrocarbon compound having at least 2 carbon atoms and one aliphatic double bond per molecule, preferably a hydrocarbon compound having 6 to 20 carbon atoms having one aliphatic double bond per molecule. There are no limitations concerning the molecular structure of component (B), and for example linear, branched, and cyclic structures are suggested. In addition, there are no limitations concerning the position of the aliphatic double bond in component (B), but the terminal ends of the molecular chain are preferable because of better reactivity. Examples of component (B) include ethylene, propene, 1-butene, 2-butene, 1-pentene, 2-pentene, 1-hexene, 2-hexene, 3-hexene, 1-heptene, 1-octene, 1-nonene, 1-decene, 1-undecene, 1-dodecene, 1-tridecene, 6-tridecene, 1-tetradecene, 1-pentadecene, 1-hexadecene, 1-heptadecene, 1-octadecene, 1-nonadecene, 1-eicocene, and other linear aliphatic hydrocarbon compounds; 2-methylundecene and other branched aliphatic hydrocarbon compounds; cyclododecene and other cyclic aliphatic hydrocarbon compounds; 2-(2,4,6-trimethylphenyl)propene and other aromatic hydrocarbon compounds containing aliphatic double bonds. Component (B) is preferably linear aliphatic hydrocarbon compounds.

The hydrosilation reaction catalyst of component (C) in the present process serves as a catalyst promoting an addition reaction of silicon-bonded hydrogen atoms of component (A) to the aliphatic double bonds of component (B). Catalysts based on transition metals of Group VIII of the Periodic Table are suggested, and preferably these are platinum catalysts. The platinum catalysts are exemplified by the same catalysts as those mentioned above.

In the process of the present invention, there are no limitations concerning the molar ratio of component (A) and component (B), but preferably the reaction is carried out such that there is 0.5 to 1.5 mole, and especially preferably 0.95 to 1.1 mole of component (B) per 1 mole of component (A).

In addition, in the process of the present invention the use of an organic solvent is optional. Examples of such organic solvents include benzene, toluene, xylene, and other aromatics; pentane, hexane, heptane, octane, decane, and other aliphatics; tetrahydrofuran, diethyl ether, dibutyl ether, and other ethers; acetone, methyl ethyl ketone, and other ketones; and ethyl acetate, butyl acetate, and other esters.

In addition, in the present process there are no limitations regarding the temperature of the reaction and it can be carried out at room temperature or with heating. When conducting the reaction with heating, the reaction temperature is preferably 50 to 200°C. Also, the reaction can be monitored by analyzing the reaction solution by various methods such as gas chromatographic analysis, infrared spectroscopic analysis, or nuclear magnetic resonance analysis and by obtaining the ratio of residual raw material in the reaction system and the content of the silicon-bonded hydrogen atoms or aliphatic unsaturated groups. Upon termination of the reaction, the target silalkylene oligosiloxane can be obtained by removing the unreacted components or organic solvent.

The present composition is useful as a surface treating agent for inorganic powders and can improve the surface characteristics of inorganic powders, such as hydrophobic properties, cohesive properties and flowability, and miscibility and dispersibility in polymers. The inorganic powders are exemplified by fumed silica, precipitated silica, fused silica, fumed titanium oxide, quartz powder, iron oxide, zinc oxide, alumina, aluminum hydroxide, magnesium oxide, magnesium hydroxide, silicon nitride, aluminum nitride, boron nitride, silicon carbonate, calcium silicate, and magnesium silicate. Examples of the processes used for treating the surface of such inorganic powders include spraying an inorganic powder with the present composition as a surface treating agent or a solution thereof at room temperature to 200°C while stirring it using an agitator and drying the powder; and a process, in which after mixing an inorganic powder with the present composition as a surface treating agent or a solution thereof in an agitator, the mixture is dried. Another example is a process, in which an inorganic powder and the present composition as a surface treating agent are added to the polymer with which the inorganic powder is to be compounded and treatment is carried out *in-situ* (the integral blending method). When the surface of inorganic powder is treated, the amount of the added surface treating agent preferably is 0.1 to 10 parts by weight, and especially preferably 0.1 to 5 parts by weight per 100 parts by weight of the inorganic powder.

The silalkylene oligosiloxane of the present invention, the process for preparation of the same, and the use of the present composition as a surface treating agent are explained in detail by referring to application examples.

Reference Example 1. 81.6 g (0.61 mole) of 1,1,3,3-Tetramethyldisiloxane were placed in a 300-mL 4-neck flask equipped with a stirrer, a thermometer, a cooling tube, and a dropping funnel under a nitrogen atmosphere. Next, a complex of platinum and 1,3-divinyltetramethyldisiloxane was added such that the amount of platinum metal was 5 ppm based on the total weight of the reaction mixture. The resultant mixture was heated to 60°C and 60g (0.41 mole) of vinyltrimethoxysilane was added thereto in a dropwise manner over 2 hours while subjecting the reaction solution to water and air cooling so as to prevent the temperature of the solution from exceeding 60°C. Upon termination of the dropwise addition, the reaction mixture was subjected to agitation for 1 hour at 60°C and analyzed using gas chromatography (GLC below) and it was found that the reaction had completed because the vinyltrimethoxysilane peak had disappeared. The remaining unreacted 1,1,3,3-tetramethyldisiloxane was stripped off under atmospheric pressure, and 82g (yield: 71.6%) of a 83 to 89°C/15 mmHg fraction was obtained by distillation under reduced pressure. When this fraction was analyzed using nuclear magnetic resonance (NMR) and infrared spectroscopic analysis (IR), the fraction was found to be a silalkylene oligosiloxane described by formula 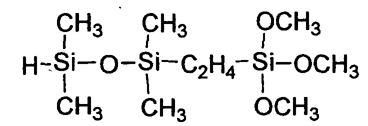 The purity of the siloxane as determined by GLC was 100%.

Application Example 1. 15g (0.053 mole) Of the silalkylene oligosiloxane prepared in Reference Example 1 was placed under a nitrogen atmosphere in a 100-mL 4-neck flask equipped with a reflux condenser, a thermometer, and a dropping funnel. Then, a complex of platinum with 1,3-divinyltetramethyldisiloxane was added thereto such that the amount of platinum metal was 0.5 ppm based on the total weight of the reaction mixture. After heating the resultant mixture to 80°C, 7.8g (0.056 mole) of 1-decene was added thereto in a dropwise manner. Upon termination of the dropwise addition, the mixture was mixed for 1.5 hours at 80 to 130°C and then sampled and analyzed using GLC. It was determined that the reaction was essentially complete because the peak of the silalkylene oligosiloxane prepared in Reference Example 1 had practically disappeared. Low-boiling fractions were stripped under reduced pressure and heating, obtaining 22.1g (yield 98.4%) of liquid. The liquid was analyzed using NMR and IR and found to be a silalkylene oligosiloxane described by the formula: 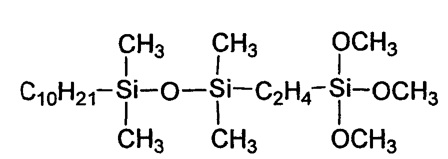 The purity of the siloxane, as determined by GLC, was 96.5%.

Application Example 2. An addition reaction was carried out in the same manner as in Application Example 1 using 20g (0.071 mole) of the silalkylene oligosiloxane prepared in Reference Example 1, a complex of platinum and 1,3-divinyltetramethyldisiloxane such that the amount of platinum metal was 0.75 ppm based on the total weight of the reaction mixture, and 6.9g (0.082 mole) of 1-hexene. As a result of after-treatment carried out in the same manner as in Application Example 1, 25.1g (yield: 96.7%) of liquid was obtained. The liquid was analyzed using NMR and IR and found to be a silalkylene oligosiloxane described by formula 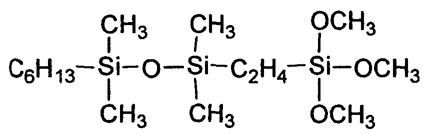 The purity of the siloxane, as determined by GLC, was 98.7%.

Application Example 3. An addition reaction was carried out in the same manner as in Application Example 1 using 20g (0.071 mole) of the silalkylene oligosiloxane prepared in Reference Example 1, a complex of platinum and 1,3-divinyltetramethyldisiloxane such that the amount of platinum metal was brought to 0.75 ppm based on the total weight of the reaction mixture, and 6.9g (0.082 mole) of 1-octene. As a result of after-treatment carried out in the same manner as in Application Example 1, 27.3g (yield: 97.7%) of liquid was obtained. The liquid was analyzed using NMR and IR and found to be a silalkylene oligosiloxane described by formula 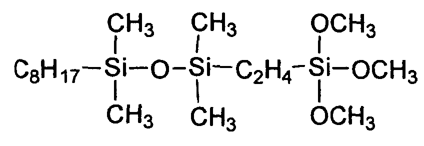 The purity of the siloxane, as determined by GLC, was 100%.

Application Example 4. An addition reaction was carried out in the same manner as in Application Example 1 using 20g (0.071 mole) of the silalkylene oligosiloxane prepared in Reference Example 1, a complex of platinum and 1,3-divinyltetramethyldisiloxane such that the amount of platinum metal was brought to 1 ppm based on the total weight of the reaction mixture, and 12.5g (0.075 mole) of 1-dodecene. As a result of after-treatment carried out in the same manner as in Application Example 1, 27.8g (yield: 87%) of liquid was obtained. The liquid was analyzed using NMR and IR and found to be a silalkylene oligosiloxane described by formula 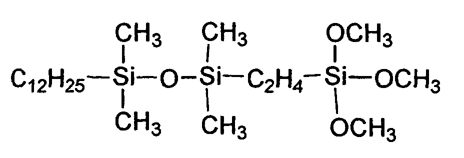 The purity of the siloxane, as determined by GLC, was 100%.

Surface treatment of alumina powder was carried out using the surface treating agent of the present invention. A silicone rubber composition was prepared in order to evaluate the miscibility and dispersibility of the surface treated alumina powder in polymers. The characteristics of the silicone rubber composition and the silicone rubber were measured in the following manner. In addition, the viscosity of the polymer, and the characteristics of the silicone rubber composition or silicone rubber are values obtained at 25°C.

### Penetration of silicone rubber composition

After placing the silicone rubber composition in a 50-mL glass beaker, the 1/4 cone penetration of the composition was measured in accordance with the method specified in JIS K 2220. In addition, it should be noted that a large penetration value points to a considerable plasticity of the silicone rubber composition and means that it has superior handling properties.

### Moldability of the silicone rubber composition

A silicone rubber composition curable by an addition reaction was sandwiched between sheets of 50-*µ*m PET (polyethylene terephthalate) film so as to produce a layer with a thickness of 1 mm and cured by heating for 30 min at 100°C. After that, the PET film sheets were peeled off and visual examination was carried out to determine whether a silicone rubber sheet had been formed. Evaluation was performed, designating those cases, in which the sheet had been formed without any problems as O: excellent moldability, those cases, wherein portions of the sheet had in some places undergone cohesive failure as Δ: somewhat inferior moldability, and those cases wherein a sheet could not be formed due to cohesive failure over a large portion thereof as X: defective moldability.

In addition, a condensation reaction curable silicone rubber composition was coated onto a sheet of 50-*µ*m PET film so as to produce a layer with a thickness of 1 mm and allowed to stand for 1 week at room temperature, whereupon the PET film was peeled off and visual examination was carried out to determine whether a silicone rubber sheet had been formed, conducting evaluation in the same manner as above.

### Thermal conductivity of silicone rubber

The thermal conductivity of silicone rubber was measured in accordance with the hot wire method specified in JIS R 2616 using a Quick Thermal Conductivity Meter Model QTM-500 from Kyoto Electronics Manufacturing Co., Ltd.

### Hardness of silicone rubber

The hardness of the silicone rubber was measured as type E durometer as specified in JIS K 6253.

Application Example 5. A surface treated alumina powder was prepared by placing 450 parts by weight of a spherical alumina powder with an average particle size of 10 *µ*m, 450 parts by weight of an amorphous alumina powder with an average particle size of 2.2 *µ*m, and 5 parts by weight of the silalkylene oligosiloxane prepared in Application Example 3 described by formula 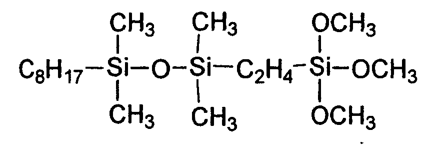 in a blender and mixing them for 2 hours at 160°C in a stream of nitrogen gas.

Practical Example 1. An addition reaction curable silicone rubber composition was prepared by uniformly mixing 900 parts by weight of the surface treated aluminum powder prepared in Application Example 5, 98 parts by weight of dimethylpolysiloxane with a viscosity of 930 mPa·s having an average of 1 silicon-bonded vinyl group per molecule (vinyl group content = 0.11 wt%) and having the terminal ends of the molecular chain blocked by dimethylvinylsiloxy groups and trimethylsiloxy groups, 0.54 parts by weight of a copolymer of methylhydrogensiloxane and dimethylsiloxane with a viscosity of 4 mPa·s having both terminal ends of the molecular chain blocked by trimethylsiloxy groups (content of silicon-bonded hydrogen atoms = 0.78 wt%), and 0.2 parts by weight of a 1,3-divinyl-1,1,3,3-tetramethyldisiloxane complex of platinum with a platinum content of 0.5 wt%. The characteristics of the silicone rubber composition are shown in Table 1.

Comparative Example 1. A surface treated aluminum powder was prepared by placing 450 parts by weight of a spherical alumina powder with an average particle size of 10 *µ*m, 450 parts by weight of an amorphous alumina powder with an average particle size of 2.2 *µ*m, and 10 parts by weight of methyltrimethoxysilane in a blender and mixing them for 2 hours at 160°C in a stream of nitrogen gas.

Practical Example 2. With the exception of using the surface treated alumina powder prepared in Comparative Example 1 instead of the surface treated alumina powder prepared in Application Example 5 used in Practical Example 1, an addition reaction curable silicone rubber composition was prepared in the same manner as in Practical Example 1. The characteristics of the silicone rubber composition are shown in Table 1.

Comparative Example 2. A surface treated alumina powder was prepared by placing 450 parts by weight of a spherical alumina powder with an average particle size of 10 *µ*m, 450 parts by weight of an amorphous alumina powder with an average particle size of 2.2 *µ*m, and 5 parts by weight of oligosiloxane described by formula 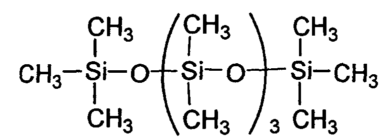 in a blender and mixing them for 2 hours at 160°C in a stream of nitrogen gas.

Practical Example 3. With the exception of using the surface treated alumina powder prepared in Comparative Example 2 instead of the surface treated alumina powder prepared in Application Example 5 used in Practical Example 1, an addition reaction curable silicone rubber composition was prepared in the same manner as in Practical Example 1. The characteristics of the silicone rubber composition are given in Table 1.

Application Example 6. A silicone rubber base containing alumina powder surface treated *in-situ* was prepared by placing 95 parts by weight of dimethylpolysiloxane with a viscosity of 360 mPa·s having both terminal ends of the molecular chain blocked by dimethylvinylsiloxy groups (vinyl group content = 0.48 wt%), 450 parts by weight of a spherical alumina powder with an average particle size of 10 *µ*m, 450 parts by weight of an amorphous alumina powder with an average particle size of 2.2 *µ*m, and 10 parts by weight of the silalkylene oligosiloxane prepared in Application Example 1 described by formula 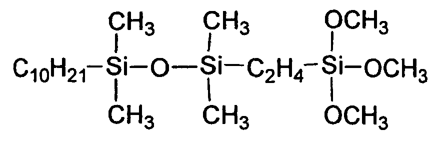 in a Ross mixer, carrying out preliminary mixing and then subjecting the mixture to agitation under heating at 150°C *in vacuo*, followed by cooling to room temperature.

Practical Example 4. An addition reaction curable silicone rubber composition was prepared by uniformly mixing 0.87 parts by weight of dimethylpolysiloxane with a viscosity of 16 mPa·s having both terminal ends of the molecular chain blocked by dimethylhydrogensiloxy groups (content of silicon-bonded hydrogen atoms = 0.13), 0.87 parts by weight of a copolymer of methylhydrogensiloxane and dimethylsiloxane with a viscosity of 4 mPa·s having both terminal ends of the molecular chain blocked by trimethylsiloxy groups (content of silicon-bonded hydrogen atoms = 0.78 wt%), and 0.2 parts by weight of a 1,3-divinyl-1,1,3,3-tetramethyldisiloxane complex of platinum with a platinum content of 0.5 wt% with the entire silicone rubber base prepared in Application Example 6. The characteristics of the silicone rubber composition are given in Table 1.

Comparative Example 3. A silicone rubber base containing alumina powder surface treated *in-situ* was prepared by placing 90 parts by weight of dimethylpolysiloxane with a viscosity of 360 mPa·s having both terminal ends of the molecular chain blocked by dimethylvinylsiloxy groups (vinyl group content = 0.48 wt%), 450 parts by weight of a spherical alumina powder with an average particle size of 10 *µ*m, 450 parts by weight of an amorphous alumina powder with an average particle diameter of 2.2 *µ*m, and 5 parts by weight of 3-glycidoxypropyltrimethoxysilane in a Ross mixer, carrying out preliminary mixing and then subjecting the mixture to agitation under heating at 150°C in vacuo, followed by cooling to room temperature.

Practical Example 5. An addition reaction curable silicone rubber composition was prepared by uniformly mixing 0.87 parts by weight of dimethylpolysiloxane with a viscosity of 16 mPa·s having both terminal ends of the molecular chain blocked by dimethylhydrogensiloxy groups (content of silicon-bonded hydrogen atoms = 0.13), 0.87 parts by weight of a copolymer of methylhydrogensiloxane and dimethylsiloxane with a viscosity of 4 mPa·s having both terminal ends of the molecular chain blocked by trimethylsiloxy groups (content of silicon-bonded hydrogen atoms = 0.78 wt%), and 0.2 parts by weight of a 1,3-divinyl-1,1,3,3-tetramethyldisiloxane complex of platinum with a platinum content of 0.5 wt% with the entire silicone rubber base prepared in Comparative Example 3. The characteristics of the silicone rubber composition are given in Table 1.

Application Example 7. A silicone rubber base containing alumina powder surface treated *in-situ* was prepared by placing 94 parts by weight of organopolysiloxane consisting of 93.5 mole% of siloxane units described by formula: (CH₃)₂SiO_{2/2}, 3.3 mole% of siloxane units described by formula CH₃SiO_{3/2}, 2.6 mole% of siloxane units described by formula (CH₃)₃SiO_{1/2}, and 0.6 mole% of siloxane units described by formula (CH₃)₂(CH₂=CH)SiO_{1/2} (vinyl group content = 0.22 wt%), 450 parts by weight of a spherical alumina powder with an average particle size of 10 *µ* m, 450 parts by weight of an amorphous alumina powder with an average particle diameter of 2.2 *µ*m, and 5 parts by weight of the silalkylene oligosiloxane prepared in Application Example 4 described by formula 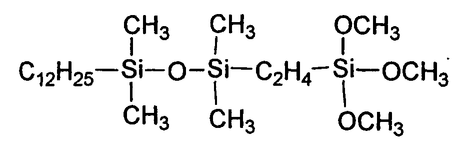 in a Ross mixer, carrying out preliminary mixing and then subjecting the mixture to agitation under heating at 150°C *in vacuo*, followed by cooling to room temperature.

Practical Example 6. An addition reaction curable silicone rubber composition was prepared by uniformly mixing 6.03 parts by weight of dimethylpolysiloxane with a viscosity of 16 mPa·s having both terminal ends of the molecular chain blocked by dimethylhydrogensiloxy groups (content of silicon-bonded hydrogen atoms = 0.13) and 0.2 parts by weight of a 1,3-divinyl-1,1,3,3-tetramethyldisiloxane complex of platinum with a platinum content of 0.5 wt% with the entire silicone rubber base prepared in Application Example 7. The characteristics of the silicone rubber composition are given in Table 1.

Application Example 8. A silicone rubber base containing alumina powder surface treated *in-situ* was prepared by placing 94 parts by weight of dimethylpolysiloxane with a viscosity of 700 mPa·s having both terminal ends of the molecular chain blocked by trimethoxysiloxy, 450 parts by weight of a spherical alumina powder with an average particle size of 10 *µ*m, 450 parts by weight of an amorphous alumina powder with an average particle size of 2.2 *µ* m, and 5 parts by weight of the silalkylene oligosiloxane prepared in Application Example 4 described by formula 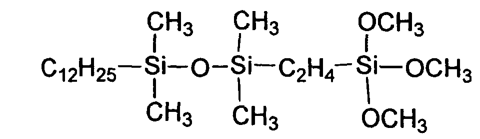 in a Ross mixer, carrying out preliminary mixing and then subjecting the mixture to agitation under heating at 150°C *in vacuo*, followed by cooling to room temperature.

Practical Example 7. A condensation reaction curable silicone rubber composition was prepared by uniformly mixing 3 parts by weight of methyltrimethoxysilane and 3 parts by weight of tetra(n-butyl)titanate with the entire silicone rubber base prepared in Application Example 8. The characteristics of the silicone rubber composition are shown in Table 1.

Comparative Example 4. A silicone rubber base containing alumina powder surface treated *in-situ* was prepared by placing 94 parts by weight of dimethylpolysiloxane with a viscosity of 700 mPa·s having both terminal ends of the molecular chain blocked by trimethoxysiloxy groups, 450 parts by weight of a spherical alumina powder with an average particle size of 10 *µ*m, 450 parts by weight of an amorphous alumina powder with an average particle diameter of 2.2 *µ*m and 3 parts by weight of 3-glycidoxypropyltrimethoxysilane in a Ross mixer, carrying out preliminary mixing and then subjecting the mixture to agitation under heating at 150°C in vacuo, followed by cooling to room temperature.

Practical Example 8. A condensation reaction curable silicone rubber composition was prepared by uniformly mixing 3 parts by weight of methyltrimethoxysilane and 3 parts by weight of tetra(n-butyl)titanate with the entire silicone rubber base prepared in Comparative Example 4. The characteristics of the silicone rubber composition are given in Table 1.

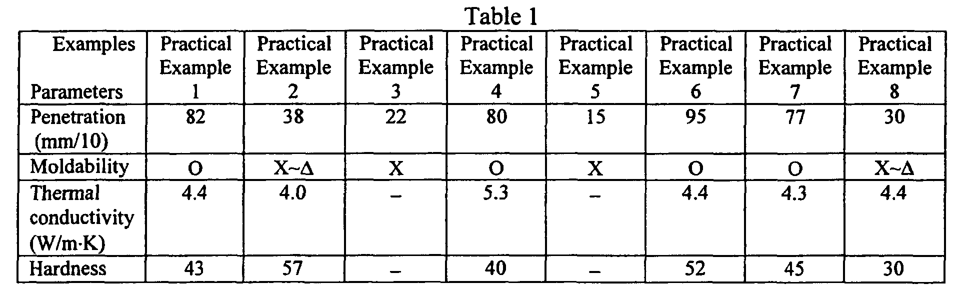

## Claims

1. A silalkylene oligosiloxane described by general formula (I) 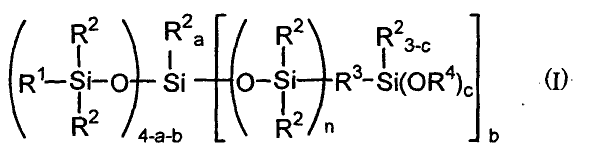 where R¹ is a monovalent hydrocarbon group having at least two carbon atoms that does not have aliphatic unsaturated bonds, each R² is an independently selected monovalent hydrocarbon group having 1 to 10 carbon atoms that do not have aliphatic unsaturated bonds, R³ is an alkylene group having at least two carbon atoms, R⁴ is an alkyl group, *a* is an integer of 0 to 2 and *b* is an integer of 1 to 3, with the proviso that *a+b* is an integer of 1 to 3, c is an integer of 1 to 3, and *n* is an integer of 0 or 1.

2. The silalkylene oligosiloxane according to claim 1, where R¹ is a monovalent hydrocarbon group having 6 to 20 carbon atoms that does not have aliphatic unsaturated bonds.

3. The silalkylene oligosiloxane according to claim 1, where R¹ is an alkyl group having 6 to 20 carbon atoms.

4. The silalkylene oligosiloxane according to any of claims 1 to 3, where R² is an alkyl group having one to four carbon atoms.

5. The silalkylene oligosiloxane according to any of claims 1 to 4, where R³ is methylmethylene or ethylene.

6. The silalkylene oligosiloxane according to any of claims 1 to 5, where R⁴ is an alkyl group having one to four carbon atoms.

7. The silalkylene oligosiloxane according to claim 1, where R¹ is a monovalent hydrocarbon group having 6 to 20 carbon atoms that does not have aliphatic unsaturated bonds, R² is an alkyl group having 1 to 4 carbon atoms, R³ is methylmethylene or ethylene, R⁴ is an alkyl group having one to four carbon atoms, *a* is 2 and *b* is 1.

8. The silalkylene oligosiloxane according to any of claims 1 to 6, where *a* is 2 and *b* is 1.

9. A process for the preparation of a silalkylene oligosiloxane described by general formula (I) 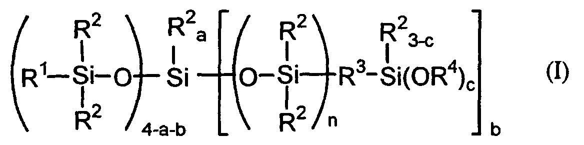 where R¹ is a monovalent hydrocarbon group having at least two carbon atoms that does not have aliphatic unsaturated bonds, each R² is an independently selected monovalent hydrocarbon group having 1 to 10 carbon atoms that do not have aliphatic unsaturated bonds, R³ is an alkylene group having at least two carbon atoms, R⁴ is an alkyl group, *a* is an integer of 0 to 2 and *b* is an integer of 1 to 3, with the proviso that *a+b* is an integer of 1 to 3, *c* is an integer of 1 to 3, and n is an integer of 0 or 1; the process comprising reacting a mixture comprising
(A) a silalkylene oligosiloxane containing silicon-bonded hydrogen atoms described by general formula 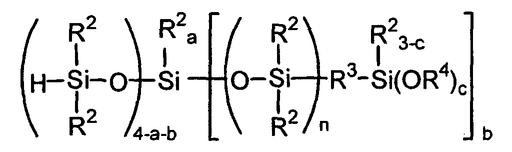 wherein R², R³, R⁴, *a*, *b*, *c* and *n* are as defined for formula (I); and
(B) a hydrocarbon compound having one aliphatic double bond per molecule; in the presence of
(C) a hydrosilation reaction catalyst.

10. The process for the preparation of silalkylene oligosiloxane according to claim 9, where component (B) is a hydrocarbon compound comprising 6 to 20 carbon atoms having one aliphatic double bond in each molecule.

11. The process for the preparation of silalkylene oligosiloxane according to claim 10, where R² is an alkyl group having 1 to 4 carbon atoms, R³
methylmethylene or ethylene, R⁴ is an alkyl group having one to four carbon atoms, *a* is 2 and *b* is 1.

12. A surface treating agent comprising a silalkylene oligosiloxane according to any of claims 1 to 8.

13. Use of a silalkylene oligosiloxane according to any of claims 1 to 8 as a surface treating agent for an inorganic powder.
